(19) **Europäisches Patentamt**

**European Patent Office**

**Office européen des brevets**

(11) Publication number: **0 054 633**
**B1**

(12) **EUROPEAN PATENT SPECIFICATION**

(45) Date of publication of patent specification: **28.03.84**

(21) Application number: **81107919.3**

(22) Date of filing: **05.10.81**

(51) Int. Cl.³: **G 11 B 15/32,**
**G 11 B 15/18, H 01 F 7/02**

(54) Magnetic clamp for a magnetic tape reel.

(30) Priority: **24.12.80 US 219621**

(43) Date of publication of application:
**30.06.82 Bulletin 82/26**

(45) Publication of the grant of the patent:
**28.03.84 Bulletin 84/13**

(84) Designated Contracting States:
**DE FR GB**

(56) References cited:
**DE - A - 2 053 940**
**DE - A - 2 648 232**
**FR - A - 2 067 523**

(73) Proprietor: **International Business Machines**
**Corporation**
**Old Orchard Road**
**Armonk, N.Y. 10504 (US)**

(72) Inventor: **Scot, Graham Mason**
**Brook House North Street**
**Westbourne Emsworth Hants. PO10, 8SR (GB)**

(74) Representative: **Gasslander, Sten**
**IBM Svenska AB Box 962**
**S-181 09 Lidingö (SE)**

Courier Press, Leamington Spa, England.

Magnetic clamp for a magnetic tape reel

This invention relates to a magnetic tape reel clamp in combination with a tape reel, according to the precharacterising part of claim 1.

Magnetic tape transports generally employ a replaceable supply reel and either a fixed or a removable take-up reel. Various arrangements have been employed for driving supply and take-up reels and maintaining an appropriate driving relationship between the reel and the motor. In one known arrangement, the reel is held in driving engagement with the motor by means of a magnetic clamp which involves a metal plate attached to the reel hub which is attracted by a suitable magnet means associated with the driving member. In tape transports where the speed of the tape is relatively high, such as tape transports for storing digital data, the acceleration and deceleration forces before substantial and a relatively high clamping force is needed to hold the reel in positive engagement with the driving member during acceleration and deceleration. The high clamping force is obtained by a relatively strong magnet which tends to increase the strength of the flux field emanating from the magnet. When the reel is positioned on the drive, the flux field passes from one pole through the metal plate on the reel hub, back to the other pole of the magnet, and any stray flux that might affect the tape is minimized. However, as the wheel is removed or as it is being inserted onto the drive, the stray flux tends to adversely affect the information stored on the magnetic reel if the clamping magnet is too strong.

It is an object of the present invention to provide an improved arrangement for clamping a magnetic tape reel to a driving element by a magnetic clamp, which avoids adversely affecting information stored on the magnetic tape.

Accordingly, the present invention is characterised in that the centre pole is extended above the surface of the magnet and annular lip portion to a point where the strength of the magnetic field is insufficient adversely to affect the condition of the tape on the reel as the reel is placed upon or removed from the clamp.

Preferably, the central opening in the metal plate is a close fit upon the extended centre pole to provide a low reluctance shunt path between the centre pole and lip portion through the plate.

It has been found in accordance with the present invention that the stray flux field can be better controlled if the centre pole of the annular magnetic holder is extended upward so that as the tape reel is being removed from or inserted onto the drive, the strength of the field, at the point where the centre opening in the plate attached to the tape reel hub surrounds the pole tip, is insufficient to adversely affect the data contained on the magnetic tape. While the strength of the flux field increases closer to the plane of the magnet, the magnetic plate functions as a shunt and prevents stray flux of any strength from reaching the tape, because the field is shunted through the magnetic plate.

The scope of the invention is defined by the appended claims; and how is it carried into effect is hereinafter particulary described with reference to the accompanying drawings, in which:—

FIGURE 1 is a sectional perspective view of a magnetic clamp arrangement for clamping a magnetic tape reel in accordance with the present invention;

FIGURE 2 is a partial sectional view to illustrate the reel in the clamped position;

FIGURE 3 illustrates the flux density field with a prior art magnetic tape reel clamp;

FIGURE 4 illustrates the difference in flux density field associated with a magnetic clamp when the centre pole is extended; and

FIGURE 5 illustrates the flux density field when the reel is positioned so that the metal shunt plate is just surrounding the centre pole.

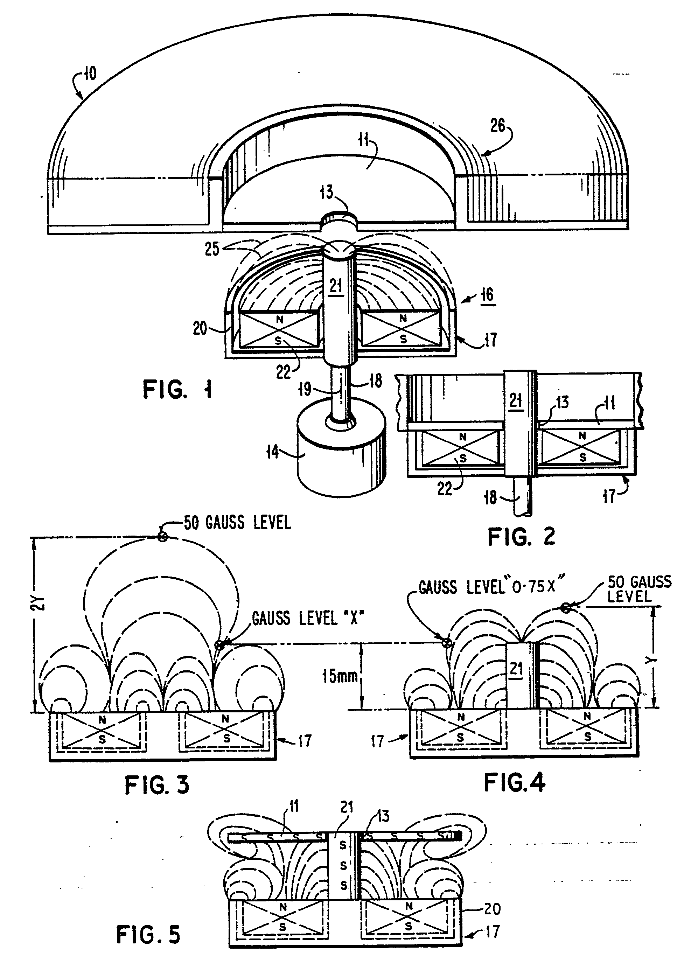

In a tape reel driving arrangement embodying the present invention (Fig. 1), a tape reel 10 has a single flange and hub on which magnetic tape 26 is wound. The reel 10 has, within and attached to the hub, a circular magnetically attractable metal plate 11 with an opening 13 disposed coaxial with the axis of reel 10. The reel 10 is driven by a drive motor 14 through a magnetic clamping arrangement 16.

The clamping arrangement 16 comprises a cup-shaped member 17 which is rotated by motor shaft 18 about an axis 19 and has a circumferentially disposed lip portion 20 and an upstanding centre pole piece 21 extending beyond the lip portion. An annular magnet 22, which is polarized in the axial direction, is mounted in the cup-shaped member 17.

The magnet 22 produces a flux field 25 whose shape is affected by the cup-like member 17 and centre pole piece 21. When a reel 10 is located on the clamping arrangement 16 with the pole piece 21 extending through the opening 13 (Fig. 2), the plate 11 is attracted and clamped to the edge of the cup-shaped member 17, as shown.

The strength of the magnetic field 25 provided by magnet 22 determines the clamping force. Where it is desired to have a relatively large clamping force, consideration must be given to the effect that the magnetic field 25 may have on the magnetic condition of the magnetic tape 26 wound on the tape reel 10 as the reel 10 is being removed from or placed on the drive.

For purposes of explanation, it will be assumed that as the reel is loaded or removed, the plane of the metal plate 11 is substantially normal to the axis 19 of revolution of the driving shaft 18 as the reel is moved from its clamped position to its unclamped position.

Figure 3 illustrates the distribution of the flux density field when a centre pole piece does not extend beyond the edge of the lip portion of the cup-like member. Fig. 4 shows the distribution of the flux density field resulting from the extension of centre pole 21, assuming the strength of the magnets are the same. By extending the centre pole 21, the surface area of one pole is increased, which tends to alter the flux density field caused by the axial orientation of magnet 22. The effect is to lower the level at which a certain flux density level occurs or, stated differently, the effect is to lower the flux density at a predetermined distance. For example, if the centre pole is lengthened causing a 65% increase in pole area, the flux density gauss level $X$ at 15 mm from the magnet surface (Fig. 3) is reduced 25% to 0.75 $x$ (Fig. 4). It will also be seen that the 50 gauss iso flux line in Fig. 3 extends twice as far (2Y) from the magentic surface as the 50 gauss iso flux line in Fig. 4. There is thus a reduction of 50% by use of the invention.

As a result of the concentration of the magnetic field, there is a reduction in the strength of the stray field and the tape reel may be lowered towards the magnet without the information recorded on the tape being adversely affected by the flux field. At the point in the loading process corresponding to Fig. 5 where the plate 11 is just level with the distal end of the centre pole 21, the annular gap between the centre pole and the opening 13 in the plate 11 is sufficiently small that the plate 11 shunts substantially all of the field from the centre pole horizontally through the plate whence it is returned to the edge of the lip portion 20 of cup-shaped member 17. Substantially all of the field, therefore, acts as a clamping force on the plate 11 and member 17.

The arrangement disclosed permits a relatively strong magnetic clamping force to be developed by employing a relatively strong magnet without adversely affecting the information recorded on the tape which is wound on the reel to be clamped by the magnetic clamp.

If a tape reel 10 were to be lowered onto the clamp of Fig. 3 with its axis out of alignment with the centre pole of the magnet, unprotected turns of tape may encounter the full strength of the magnetic field and information stored therein may be damaged, particularly upon lateral movement to align the reel upon the clamp. The provision of an extended centre pole 21 as in Fig. 4 ensures that any lateral aligning movement can only occur above the pole in a weak region of stray field, thus preventing such stored information damage. The extended centre pole thus not only concentrates the field, but stops the reel approaching the clamp otherwise than in alignment.

While the invention has been particularly shown and described with reference to a preferred embodiment thereof, it will be understood by those skilled in the art that various other changes in the form and details may be made therein without departing from the scope of the invention.

## Claims

1. A magnetic tape reel clamp in combination with a tape reel, said combination comprising an annular magnet (22) polarised in an axial direction and mounted in a magnet holder (17) having a centre pole (21) and an annular lip portion (20) to attract and clamp a metal plate (11) secured to the tape reel (10) and providing a central opening (13) for the centre pole (21), the holder being mounted for rotation about the axis by a motor (14), characterised in that the centre pole (21) is extended above the surface of the magnet (22) and annular lip portion (20) to a point where the strength of the magnetic field is insufficient adversely to affect the condition of the tape on the reel (10) as the reel is placed upon or removed from the clamp.

2. A combination according to claim 1, in which the central opening (13) in the metal plate (11) is a close fit upon the extended centre pole (21) to provide a low reluctance shunt path between the centre pole (21) and lip portion (20) through the plate (11).

## Revendications

1. Dispositif de serrage magnétique en combinaison avec une bande magnétique, cette combinaison comportant un aimant annulaire (22) polarisé en direction axiale et monté dans un support d'aimant (17) pourvu d'un pôle central (21) et d'une partie de lèvre annulaire (20), pour attirer et verrouiller une plaque métallique (11) fixée sur la bobine de bande magnétique (10) et présentant une ouverture centrale (13) pour le pôle central (21), le support étant monté pour tourner autour de l'axe sous la commande d'un moteur (14), caractérisé en ce que le pôle central (21) est prolongé audessus de la surface de l'aimant (22) et de la partie de lèvre annulaire (20) jusqu'en un point où la force du champ magnétique est insuffisante pour affecter défavorablement l'état de la bande magnétique sur la bobine (10), lorsque la bobine est placée sur le dispositif de serrage ou lorsqu'elle en est ôtée.

2. Combinaision selon la revendication 1, caractèrisée en ce que l'ouverture centrale (13) de la plaque métallique (11) est étroitement ajustée sur le pôle central prolongé (12), de manière à former un trajet de court-circuit à faible réluctance entre le pôle central (21) et la partie de lèvre (20), au travers de la plaque (11).

**Patentansprüche**

1. Klemmvorrichtung für eine Magnetbandspule in Kombination mit einer Bandspule, wobei die Kombination einen ringförmigen Magnet (22) aufweist, der in einer axialen Richtung polarisiert und in einem Magnethalter (17) angeordnet ist, der einen mittleren Pol (21) und einen ringförmigen Randbereich (20) aufweist, um eine an der Bandspule (10) befestigte Metallplatte (11), die eine mittlere Öffnung (13) für den mittleren Pol (21) aufweist, anzuziehen und festzuklemmen, wobei der Halter zur Drehung um die Achse durch einen Motor (14) montiert ist, dadurch gekennzeichnet, daß der mittlere Pol (21) sich über die Oberfläche des Magneten (22) und den ringförmigen Randbereich (20) bis zu einem Punkt hinaus erstreckt, an dem die Stärke des Magnetfeldes nicht genügend schädlich ist, um den Zustand des Bandes auf der Spule (10) zu beeinträchtigen, wenn die Spule auf der Klemmeinrichtung angeordnet oder von dieser entfernt wird.

2. Kombination nach Anspruch 1, bei der die mittlere Öffnung (13) in der Metallplatte (11) dicht auf dem verlängerten mittleren Pol (21) sitzt, um einen Nebenschlußweg einer niedrigen Reluktanz zwischen dem mittleren Pol (21) und dem Randbereich (20) über die Platte (11) zu bilden.

FIG. 1

FIG. 2

FIG. 3

FIG. 4

FIG. 5

50 GAUSS LEVEL

GAUSS LEVEL "X"

2Y

15mm

GAUSS LEVEL "0·75X"

50 GAUSS LEVEL

Y

1